# EUROPÄISCHE PATENTSCHRIFT

(11) **EP 3 313 607 B1**
(45) Veröffentlichungstag und Bekanntmachung des Hinweises auf die Patenterteilung: **21.04.2021**
(21) Anmeldenummer: 16732259.3
(22) Anmeldetag: 20.06.2016
(51) Int. Cl.: B23K 26/03, B23K 26/06, B23K 26/38, B23K 31/12

(54) **LASERBEARBEITUNGSKOPF UND LASERBEARBEITUNGSMASCHINE DAMIT**
LASER MACHINING HEAD AND MACHINE COMPRISING SAID HEAD
TÊTE DE TRAITEMENT PAR LASER ET MACHINE AVEC UNE TELLE TÊTE

(30) Priorität: 29.06.2015 DE 102015211999
(43) Veröffentlichungstag der Anmeldung: 02.05.2018
(73) Patentinhaber: Trumpf Werkzeugmaschinen GmbH + Co. KG, 71254 Ditzingen (DE)
(72) Erfinder: REGAARD, Boris, 70499 Stuttgart (DE)
(74) Vertreter: Kohler Schmid Möbus Patentanwälte
(86) Internationale Anmeldenummer: PCT/EP2016/064135
(87) Internationale Veröffentlichungsnummer: WO 2017/001220

(56) Entgegenhaltungen:
- WO-A1-2013/113306
- WO-A1-2015/036140
- DE-A1-102013 210 078

## Beschreibung

Die vorliegende Erfindung betrifft einen Laserbearbeitungskopf, umfassend: eine Fokussiereinrichtung zur Fokussierung eines Bearbeitungslaserstrahls auf ein zu bearbeitendes Werkstück, die in einem Bearbeitungsstrahlengang des Bearbeitungslaserstrahls angeordnet ist, eine optische Abbildungseinrichtung, die einen Detektor umfasst und die ausgebildet ist, Beobachtungsstrahlung aus einem Bearbeitungsbereich des Werkstücks entlang eines die Fokussiereinrichtung durchlaufenden Beobachtungsstrahlengangs auf den Detektor abzubilden, eine im Beobachtungsstrahlengang angeordnete, vom Detektor beabstandete Blende, wobei die optische Abbildungseinrichtung zur Abbildung des Bearbeitungsbereichs des Werkstücks auf den Detektor eine zwischen der Blende und dem Detektor angeordnete weitere Optik umfasst, sowie einen Strahlteiler zur Trennung des Beobachtungsstrahlengangs der Beobachtungsstrahlung vom Bearbeitungsstrahlengang des Bearbeitungslaserstrahls. Die Erfindung betrifft auch eine Laserbearbeitungsmaschine mit einem solchen Laserbearbeitungskopf.

Ein solcher Laserbearbeitungskopf und eine solche Laserbearbeitungsmaschine sind in der WO 2015/036140 A1 beschrieben.

Bei der Lasermaterialbearbeitung wird ein Bearbeitungslaserstrahl durch eine in einem Laserbearbeitungskopf angeordnete, aus Linsen und/oder Spiegeln bestehende optische Anordnung, die eine Fokussiereinrichtung aufweist, entlang eines Bearbeitungsstrahlengangs geführt und auf das zu bearbeitende Werkstück fokussiert.

Zur Prozessbeobachtung während der Lasermaterialbearbeitung wird üblicherweise im Bearbeitungsstrahlengang innerhalb des Laserbearbeitungskopfs ein Strahlteiler (z.B. ein wellenlängenselektiver Spiegel oder ein Scraperspiegel) angeordnet, durch den der Beobachtungsstrahlengang vom Bearbeitungsstrahlengang getrennt wird.

Ein solcher Laserbearbeitungskopf ist beispielsweise in der DE10120251B4 offenbart. Der dort beschriebene Laserbearbeitungskopf weist eine Sensorvorrichtung auf, die eine ortsauflösende Empfängeranordnung mit einer Abbildungsoptik, einer Blende und einem strahlungsempfindlichen Empfänger umfasst. Mit der Abbildungsoptik ist ein Gebiet im Bereich der Wechselwirkungszone zwischen dem Laserstrahl und dem Werkstück auf die Blende abbildbar, die auf dem Detektor angeordnet ist. Zur Auswahl des detektierten Beobachtungsfeldes kann die Blende in mindestens einer Richtung senkrecht zur optischen Achse der Abbildungsoptik verschiebbar sein.

Ein Laserbearbeitungskopf zur Prozessbeobachtung, bei dem Strahlenbündel, die vom Werkstück ausgehen, über einen seitlich zum Bearbeitungslaserstrahl angeordneten Umlenkspiegel einem Beobachtungskanal zugeführt werden, ist aus der DE19630437A1 bekannt geworden.

Bei der so genannten koaxialen Prozessbeobachtung verläuft der Beobachtungsstrahlengang durch die Fokussiereinrichtung hindurch, wobei typischer Weise die Strahlachse des Bearbeitungslaserstrahls und die optische Achse des Beobachtungsstrahlengangs zusammenfallen. Die Fokussiereinrichtung weist typischer Weise eine Fokussierlinse auf bzw. besteht aus einer Fokussierlinse, die den Bearbeitungslaserstrahl auf das Werkstück fokussiert, wodurch sich mehrere Probleme ergeben:
Bei der Durchstrahlung der Fokussierlinse mit Bearbeitungslaserstrahlung hoher Leistung bildet sich durch Absorption der Bearbeitungslaserstrahlung im Linsensubstrat und in der typischer Weise vorhandenen Linsenbeschichtung eine thermische Linse aus, d.h., der Brechungsindex im Substrat ist nicht mehr homogen, sondern verändert sich mit dem sich ausbildenden Temperaturgradienten. Im idealisierten Fall einer rotationssymmetrischen Verteilung der Leistung des Bearbeitungslaserstrahls in der Fokussierlinse weist die Fokussierlinse in der Mitte die größte Temperatur auf, und die Temperatur nimmt radial nach außen zum Linsenrand hin ab. Beim Einsatz eines CO₂-Bearbeitungslaserstrahls und einer Zinkselenidlinse zur Fokussierung des Bearbeitungslaserstrahls treten mit zunehmender Laserleistung und fortschreitender Bearbeitungsdauer signifikante Brennweitenverkürzungen der Fokussierlinse von bis zu 5% auf. Beim Einsatz von Festkörperlasern und Quarz-Optiken als Strahlquelle zur Erzeugung des Laserstrahls ist der Effekt weniger stark ausgeprägt, tritt jedoch bei großen Leistungsdichten auf der Fokussierlinse ebenfalls auf.

Für die Fokussierung des Bearbeitungslaserstrahls sind die Aberrationen, die durch die thermische Linse auftreten, tolerabel. Problematisch sind die thermisch hervorgerufenen Aberrationen jedoch für die koaxial durch die Fokussierlinse geführte Abbildung des Bearbeitungsprozesses zur Prozessbeobachtung, d.h. für die Beobachtungsstrahlung. Im Allgemeinen verschlechtert der sich ausbildende Brechungsindexgradient in der Fokussierlinse die Abbildungseigenschaften der Fokussierlinse, so dass eine in einem Beobachtungsstrahlengang angeordnete optische Abbildungseinrichtung, die zur koaxialen Beobachtung des Bearbeitungsprozesses durch diese Fokussierlinse hindurch dient, nicht zufriedenstellend für unterschiedliche thermische Belastungszustände der Fokussierlinse optimiert werden kann.

Probleme für die Genauigkeit der Prozessbeobachtung ergeben sich außerdem bei einer Änderung des Objektabstands von der Fokussierlinse, wenn also Werkstücke mit sich änderndem Abstand zwischen dem Laserbearbeitungskopf und der Werkstückoberfläche bearbeitet werden sollen. Dies ist z.B. beim Wechsel zwischen Einstechen und Schneiden der Fall. Außerdem kann es sich nachteilig auf die Beobachtungsgenauigkeit auswirken, wenn die Objektebene nicht exakt senkrecht zur Laserstrahlachse (und damit zur Beobachtungsachse) ausgerichtet ist.

### Aufgabe der Erfindung

Der vorliegenden Erfindung liegt die Aufgabe zugrunde, einen Laserbearbeitungskopf mit einer optischen Abbildungseinrichtung für die Prozessbeobachtung bereitzustellen, mit dem die Genauigkeit der Prozessbeobachtung erhöht und bevorzugt die Beobachtung flexibel den Prozessbedingungen anpassbar wird.

### Gegenstand der Erfindung

Diese Aufgabe wird erfindungsgemäß durch einen Laserbearbeitungskopf der eingangs genannten Art gelöst, bei dem die optische Abbildungseinrichtung eine im Beobachtungsstrahlengang zwischen dem Strahlteiler und der Blende angeordnete Abbildungsoptik in Form eines Teleskops aufweist, die ausgebildet ist, im Bearbeitungsstrahlengang des Bearbeitungsstrahls zwischen dem Strahlteiler und dem Werkstück ein Bild der Blende zu erzeugen (siehe Anspruch 1).

Weitere Ausführungsformen der Erfindung sind in den abhängigen Ansprüche definiert.

Die Fokussiereinrichtung kann eine oder mehrere (Fokussier-)Linsen sowie ggf. eines oder mehrere reflektierende optische Elemente umfassen. Die Fokussiereinrichtung kann alternativ ggf. ausschließlich reflektierende optische Elemente aufweisen. Bei dem Detektor kann es sich um einen ortsauflösenden Detektor handeln, z.B. um eine Kamera, aber auch um einen nicht ortsauflösenden Detektor, beispielsweise um eine Fotodiode. Der Detektor ist für die Wellenlänge(n) der Beobachtungsstrahlung sensitiv, die beispielsweise im sichtbaren oder im infraroten Wellenlängenbereich liegen können. Die zentrale Achse des (fokussierten) Bearbeitungslaserstrahls stimmt typischer Weise mit der optischen Achse der optischen Abbildungseinrichtung überein, so dass die Beobachtung des Bearbeitungsbereichs koaxial durch die Fokussierlinse hindurch erfolgt.

Der erfindungsgemäße Laserbearbeitungskopf weist eine optische Abbildungseinrichtung auf, die eine Objektebene, die typischer Weise mit der Werkstückoberfläche zusammenfällt, auf den Detektor abbildet. Durch die Abbildungsoptik der optischen Abbildungseinrichtung wird erreicht, dass eine begrenzende Blende für die Abbildung der Objektebene auf den Detektor, die im Beobachtungsstrahlengang zwischen dem Strahlteiler und dem Detektor angeordnet ist, so wirkt, als wäre die Blende im Bearbeitungsstrahlengang des Bearbeitungslaserstrahls angeordnet ("virtuelle Blende"). Die tatsächliche Anordnung einer Blende für die Abbildung der Objektebene im Bearbeitungsstrahlengang des Bearbeitungslaserstrahls wäre nur durch eine (aufwändige) wellenlängenselektive Ausführung der Blende möglich, da der Bearbeitungslaserstrahl durch diese Blende hindurchtreten müsste.

Der erfindungsgemäße Laserbearbeitungskopf kann in Abhängigkeit von der konkreten Position des Bilds der Blende im Bearbeitungsstrahlengang auf unterschiedliche Weise zur Verbesserung bei der Genauigkeit der Prozessbeobachtung beitragen:
Bei einer Ausführungsform ist der Laserbearbeitungskopf ausgebildet, das Bild der Blende im Bearbeitungsstrahlengang zwischen der Fokussiereinrichtung, insbesondere zwischen einer Fokussierlinse der Fokussiereinrichtung, und dem Werkstück bzw. der Objektebene der optischen Abbildungseinrichtung zu erzeugen. Wird die Blende so im Beobachtungsstrahlengang positioniert bzw. ist der Laserbearbeitungskopf bzw. die optische Abbildungseinrichtung so ausgebildet, dass die Blende über die Abbildungsoptik zwischen der Fokussierlinse und der Objektebene der optischen Abbildungseinrichtung abgebildet wird, so kann eine nicht senkrecht zur Strahlachse des Bearbeitungslaserstrahls verlaufende Ausrichtung der Objektebene korrigiert werden, da bei einer virtuellen Blende, die zwischen der Fokussierlinse und der Werkstückoberfläche als Objektebene angeordnet ist, die weiter außen liegenden Objektpunkte des Bearbeitungsbereichs durch einen weiter innen liegenden Linsenbereich abgebildet werden.

Bei einer weiteren alternativen Ausführungsform ist der Laserbearbeitungskopf bzw. die optische Abbildungseinrichtung ausgebildet, das Bild der Blende im Bearbeitungsstrahlengang zwischen dem Strahlteiler und der Fokussiereinrichtung, insbesondere zwischen dem Strahlteiler und einer Fokussierlinse der Fokussiereinrichtung, zu erzeugen. Wenn die Blende im Beobachtungsstrahlengang so positioniert ist, dass sie über die Abbildungsoptik im Bearbeitungsstrahlengang des Bearbeitungslaserstrahls in einen Abschnitt zwischen dem Strahlteiler und einer Fokussierlinse der Fokussiereinrichtung abgebildet wird, in dem die Beobachtungsstrahlung typischer Weise kollimiert verläuft, kann der Einfluss einer Variation des Bearbeitungsabstands oder einer Brennweitenänderung der Fokussierlinse bei thermischer Belastung der Fokussierlinse auf die Abbildung der Objektebene kompensiert werden, wie nachfolgend erläutert wird:

Die thermische Belastung der Fokussierlinse führt zu einer Verkürzung ihrer Brennweite, die rechnerisch in Abhängigkeit von der eingestrahlten Laserleistung des Bearbeitungslaserstrahls ermittelt werden kann. Die Position der Blende im Beobachtungsstrahlengang kann daher so gewählt werden, dass die Abbildung der Objektebene auf dem Detektor bei thermisch belasteter Fokussierlinse telezentrisch erfolgt. Dazu wird die Position der Blende so gewählt, dass die abgebildete virtuelle Blende bzw. das Bild der Blende in der Brennebene der thermisch belasteten Fokussierlinse liegt und auf diese Weise eine telezentrische Abbildung des Prozessortes bzw. des Bearbeitungsbereichs während der Laserbearbeitung erreicht wird. Bei der telezentrischen Abbildung ändert sich die Vergrößerung nicht mit dem Objektabstand, d.h. auch bei einer Variation des Bearbeitungsabstandes kann zuverlässig eine Objektgröße vermessen werden. Da bei unterschiedlicher Laserleistung des Bearbeitungsstrahls die thermische Belastung der Fokussierlinse variiert, tritt ein (kleiner) Fehler in der telezentrischen Abbildung auf, wenn die Position der Blende im Beobachtungsstrahlengang nicht variiert wird. Soll dieser Fehler vermieden werden, so kann dies durch eine Verschiebung der Blende und eine Anpassung der Abbildungsoptik (d.h. eine Verschiebung von zumindest einem der optischen Elemente der Abbildungsoptik) erfolgen.

Bei einer Variante dieser Ausführungsform ist der Laserbearbeitungskopf ausgebildet, das Bild der Blende in einer Brennebene der Fokussierlinse der Fokussiereinrichtung zu erzeugen, die sich zwischen dem Strahlteiler und der Fokussierlinse befindet. In diesem Fall erfolgt die Abbildung der Objektebene auf dem Detektor bei thermisch unbelasteter Fokussierlinse telezentrisch: Bei der telezentrischen Abbildung verlaufen alle Hauptstrahlen von den abgebildeten Objektpunkten parallel, so dass sich bei einer Änderung des Objektabstands die Vergrößerung nicht ändert. Änderungen des Objektabstands von der Fokussierlinse wirken sich in diesem Fall also nicht auf die Abbildung aus.

Bei einer weiteren alternativen Ausführungsform ist der Laserbearbeitungskopf bzw. die optische Abbildungseinrichtung ausgebildet, das Bild der Blende in einer Fokussierlinse der Fokussiereinrichtung zu erzeugen. Wird die Blende im Beobachtungsstrahlengang so positioniert, dass sie über die Abbildungsoptik innerhalb der Fokussierlinse abgebildet wird, dann erfolgt die Abbildung des Prozessortes bzw. des Bearbeitungsbereichs des Werkstücks so, als ob in der Fokussierlinse eine reale Blende angeordnet wäre. Die Blendenöffnung umfasst hierbei nur einen kleinen, inneren Bereich der Fokussierlinse, in dem die thermische Belastung der Fokussierlinse gleichmäßig ist. Es werden daher alle Objektpunkte des Prozessortes bzw. des Bearbeitungsbereichs so durch das fokussierende Element abgebildet, dass auf deren Abbildung im Wesentlichen die gleiche Brechungsindexänderung der Fokussierlinse wirksam wird. Auf diese Weise kann die thermische Linse durch eine entsprechend optimierte Abbildungsoptik für alle Objektpunkte gleichermaßen korrigiert werden.

Bei einer Weiterbildung der obigen Ausführungsformen ist die Blende im Beobachtungsstrahlengang verschiebbar und/oder (mindestens) eine Blendenöffnung der Blende ist senkrecht zum Beobachtungsstrahlengang (in der Blendenebene) bewegbar. Wie weiter oben beschrieben wurde, ist eine Verschiebung der Blende im Beobachtungsstrahlengang günstig, wenn die Fokussierlinse thermisch belastet wird. Durch die Verschiebung der Blende kann in diesem Fall erreicht werden, dass das Bild der Blende im Bearbeitungsstrahlengang in Abhängigkeit von der Laserleistung des Bearbeitungsstrahls immer am gewünschten Ort, z.B. in der Brennebene der thermisch belasteten Fokussierlinse oder in der Fokussierlinse selbst liegt. Alternativ oder zusätzlich kann die Blende, genauer gesagt die Blendenöffnung der Blende, auch senkrecht zum Bearbeitungsstrahlengang variabel im Beobachtungsstrahlengang positionierbar sein. Dazu kann die Blende beispielsweise in der Blendenebene verschiebbar und/oder um eine exzentrisch zur Blendenöffnung angeordnete, senkrecht zur Blendenebene verlaufende Drehachse rotierbar sein. Durch die Positionierbarkeit der Blende quer zur Propagationsrichtung des Bearbeitungsstrahlengangs bzw. zur optischen Achse des Bearbeitungsstrahls kann der Teilbereich der Fokussierlinse eingestellt werden, durch den die Abbildung der Objektebene auf dem Detektor erfolgt. Auf diese Weise kann die Beobachtungsrichtung bzw. der Beobachtungswinkel verändert werden.

Die Abbildungsoptik ist gemäß der Erfindung als Teleskop, z.B. als Galileo-Teleskop oder als Kepler-Teleskop, ausgebildet. Ein Kepler-Teleskop weist eine erste Linse und eine zweite Linse auf, die im Abstand ihrer Brennweiten voneinander angeordnet sind. Das im Kepler-Teleskop auftretende Zwischenbild der mittels des optischen Abbildungssystems abgebildeten Objektebene vereinfacht die Justierung des Gesamtsystems bei der Montage und ermöglicht die Ausblendung von störender Streustrahlung, wie weiter unten beschrieben wird. Das Zwischenbild wird in einer zwischen den beiden Linsen des Kepler-Teleskops gebildeten Brennebene erzeugt, so dass die Blende ("Fernfeldblende") zwischen dem Zwischenbild und dem Detektor, d. h. im kollimierten Strahlengang nach der letzten Linse des Teleskops angeordnet ist. Der Abstand der Blende von der letzten Linse des Teleskops bestimmt die Position der virtuellen Blende im Bearbeitungsstrahlengang.

Bei einer Weiterbildung ist in einer gemeinsamen Brennebene zwischen der ersten Linse und der zweiten Linse des Kepler-Teleskops eine weitere Blende angeordnet. In der Brennebene des Kepler-Teleskops kann vorteilhafter Weise eine zusätzliche Blende ("Nahfeldblende") angeordnet sein, die den Einfluss von störender Streustrahlung vermindert. Reflektierte Strahlungsanteile von den optischen Elementen im Bearbeitungsstrahlengang des Bearbeitungslaserstrahls, insbesondere von den Oberflächen der Fokussierlinse, werden von der zusätzlichen Blende ausgeblendet und gelangen nicht auf den Detektor.

In einer Weiterbildung ist/sind die im Beobachtungsstrahlengang vom Strahlteiler ausgehend erste und/oder zweite Linse des Kepler-Teleskops verschiebbar im Beobachtungsstrahlengang angeordnet. Bei einer thermisch bedingten Brennweitenänderung der Fokussierlinse oder bei einer Änderung des Objektabstands zum Laserbearbeitungskopf ändert sich die Position des Zwischenbilds zwischen den Linsen des Kepler-Teleskops. Durch die Verschiebung der zweiten Linse kann der Abstand zwischen dem Kepler-Teleskop und der Blende ("Fernfeldblende") so verändert werden, dass das Zwischenbild wieder in der Brennebene der zweiten Linse liegt. Auf diese Weise verläuft die Beobachtungsstrahlung auch bei einer Änderung der Brennweite der Fokussierlinse bzw. des Objektabstands zwischen dem Kepler-Teleskop und der Blende parallel und die Beobachtungsstrahlung bzw. die Strahlen der Beobachtungsstrahlung treten parallel durch die Blendenöffnung der Blende.

Bei einer Weiterbildung ist die weitere Blende mit der zweiten Linse gekoppelt im Beobachtungsstrahlengang verschiebbar. Unter einer gekoppelten Verschiebung wird verstanden, dass bei der Verschiebung der Abstand zwischen der weiteren Blende und der zweiten Linse konstant bleibt, d.h. dass diese als Einheit verschoben werden. Bei einer thermisch bedingten Brennweitenänderung der Fokussierlinse oder bei einer Änderung des Objektabstands wird durch Verschieben der Einheit aus zweiter Linse des Kepler-Teleskops und zusätzlicher Blende die zusätzliche Blende wieder genau im Zwischenbild angeordnet. Die Verschiebung der zusätzlichen Blende bzw. der zweiten Linse erfolgt typischer Weise durch einen Aktuator.

Wie weiter oben beschrieben wurde, kann zusätzlich auch die Blende (die "Fernfeldblende"), insbesondere unabhängig von der zweiten Teleskoplinse, im Beobachtungsstrahlengang verschiebbar sein, so dass das Bild der Blende im Bearbeitungsstrahlengang in Abhängigkeit von der Laserleistung des Bearbeitungsstrahls immer in der Brennebene der thermisch belasteten Fokussierlinse liegt.

Wie weiter oben beschrieben wurde, umfasst die optische Abbildungseinrichtung zur Abbildung des Bearbeitungsbereichs auf den Detektor eine weitere Optik, die zwischen der Blende und dem Detektor angeordnet ist. Die Optik kann beispielsweise eine oder mehrere Linsen umfassen und ist typischer Weise ausgebildet, gemeinsam mit der Fokussiereinheit, insbesondere mit der Fokussierlinse, die Abbildung der Objektebene bzw. des Bearbeitungsbereichs auf der Werkstückoberfläche auf den Detektor zu bewirken.

Bei einer weiteren Ausführungsform ist der Strahlteiler als wellenlängenselektives optisches Element ausgebildet. Typischer Weise unterscheidet sich die Wellenlänge des Bearbeitungslaserstrahls von der Wellenlänge der Beobachtungsstrahlung, so dass die Trennung des Beobachtungsstrahlengangs und des Bearbeitungsstrahlengangs durch ein wellenlängenselektives optisches Element möglich ist. Alternativ kann der Strahlteiler als geometrischer Strahlteiler, beispielsweise als Scraper-Spiegel, ausgebildet sein, der eine zentrale Öffnung aufweist, durch den entweder der Bearbeitungslaserstrahl oder die Beobachtungsstrahlung hindurch tritt, während die Beobachtungsstrahlung oder der Bearbeitungsstrahl an dem Scraper-Spiegel umgelenkt wird. Auch die Verwendung von anderen Formen von Strahlteilern ist möglich.

Ein weiterer Aspekt der Erfindung betrifft eine Laserbearbeitungsmaschine mit einem Laserbearbeitungskopf wie weiter oben beschrieben (siehe Anspruch 11), sowie eine Strahlquelle zur Erzeugung des Bearbeitungslaserstrahls. Bei der Strahlquelle kann es sich beispielsweise um einen CO₂-Laser, einen Festkörper-Laser, insbesondere einen Scheibenlaser, einen Diodenlaser oder um andere Arten von Laserquellen handeln. Die Laserbearbeitungsmaschine weist für die Bearbeitung eines Werkstücks typischer Weise Komponenten in Form von Aktuatoren etc. auf, die eine Relativbewegung zwischen dem Laserbearbeitungskopf und dem Werkstück ermöglichen. Auch der Abstand zwischen dem Laserbearbeitungskopf und dem Werkstück kann bei einer Laserbearbeitungsmaschine typischer Weise eingestellt werden. Für die Steuerung der Bearbeitung des Werkstücks weist die Laserbearbeitungsmaschine eine Steuer- und/oder Regeleinrichtung auf.

Weitere Vorteile der Erfindung ergeben sich aus der Beschreibung und der Zeichnung. Ebenso können die vorstehend genannten und die noch weiter aufgeführten Merkmale je für sich oder zu mehreren in beliebigen Kombinationen Verwendung finden. Die gezeigten und beschriebenen Ausführungsformen sind nicht als abschließende Aufzählung zu verstehen, sondern haben vielmehr beispielhaften Charakter für die Schilderung der Erfindung.

Es zeigen:
- Fig. 1: eine schematische Darstellung eines Ausführungsbeispiels einer Laserbearbeitungsmaschine mit einem Laserbearbeitungskopf zur Prozessbeobachtung, der eine optische Abbildungseinrichtung mit einer Blende aufweist, die in eine Fokussierlinse abgebildet wird,
- Fig. 2: eine Darstellung analog Fig. 1, bei der die Blende in eine Brennebene der Fokussierlinse abgebildet wird,
- Fig. 3: eine Darstellung analog Fig. 2, bei der die Blende zwischen die Fokussierlinse und eine Werkstückoberfläche abgebildet wird, und
- Fig. 4: eine Darstellung analog Fig. 2 und Fig. 3, bei der in einer Brennebene zwischen einer ersten Linse und einer zweiten Linse eines Kepler-Teleskops der optischen Abbildungseinrichtung eine weitere Blende angeordnet ist.

In der folgenden Beschreibung der Zeichnungen werden für gleiche bzw. funktionsgleiche Bauteile identische Bezugszeichen verwendet.

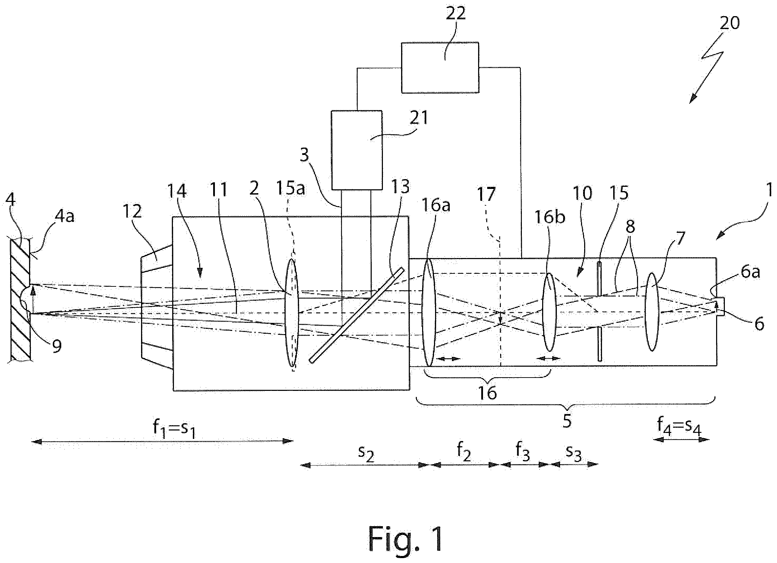

Fig. 1 zeigt einen beispielhaften Aufbau eines Laserbearbeitungskopfs 1, welcher eine Fokussiereinrichtung in Form einer Fokussierlinse 2 aufweist, die zur Fokussierung eines Bearbeitungslaserstrahls 3 auf ein Werkstück 4 dient. Im gezeigten Beispiel ist das Werkstück 4, genauer gesagt eine Werkstückoberfläche 4a, in einem Abstand zur Fokussierlinse 2 angeordnet, welcher der Brennweite f₁ bzw. der Objektweite s₁ der Fokussierlinse 2 entspricht. Der Laserbearbeitungskopf 1 weist zudem eine optische Abbildungseinrichtung 5 mit einem Detektor 6 auf. Eine Optik 7 in Form einer Linse ist im Abstand ihrer Brennweite f₄ bzw. Objektweite s₄ vom Detektor 6 angeordnet und dient gemeinsam mit der Fokussierlinse 2 zur Abbildung der Werkstückoberfläche 4a, die eine Objektebene der optischen Abbildungseinrichtung 5 bildet, auf eine Bildebene, an welcher der Detektor 6, genauer gesagt die strahlungsempfindliche Oberfläche 6a des Detektors 6, angeordnet ist.

Mit Hilfe der optischen Abbildungseinrichtung 5 wird Beobachtungsstrahlung 8 (z.B. Prozessstrahlung), die von einem Bearbeitungsbereich 9 des Werkstücks 4 ausgeht, entlang eines Beobachtungsstrahlengangs 10 auf den Detektor 6 abgebildet, der sich entlang einer optischen Achse erstreckt, die mit der Laserstrahlachse 11 des Bearbeitungslaserstrahls 3 in einem Abschnitt zwischen der Fokussierlinse 2 und dem Werkstück 4 übereinstimmt. In dem Bearbeitungsbereich 9 wird im gezeigten Beispiel mit dem Bearbeitungsstrahl 3 in das Werkstück 4 eingestochen, es können aber auch andere Bearbeitungsprozesse, z.B. eine schneidende oder schweißende Bearbeitung, an dem Bearbeitungsbereich 9 vorgenommen werden. Wie in Fig. 1 zu erkennen ist, verläuft der Beobachtungsstrahlengang 10 vom Werkstück 4 ausgehend durch eine Bearbeitungsdüse 12 sowie durch die Fokussierlinse 2 koaxial zu Laserstrahlachse 11 des Bearbeitungslaserstrahls 3. Der Ausschnitt des Werkstücks 4 mit dem Bearbeitungsbereich 9, welcher auf den Detektor 6 abgebildet wird, wird randseitig von der Innenkontur der Bearbeitungsdüse 12 begrenzt.

In dem Laserbearbeitungskopf 1 ist ein Strahlteiler 13 angeordnet, der im gezeigten Beispiel als wellenlängenselektives optisches Element bzw. als Strahlteilerspiegel mit einer wellenlängenselektiven Beschichtung ausgebildet ist, um den Beobachtungsstrahlengang 10 der Beobachtungsstrahlung 8 vom Bearbeitungsstrahlengang 14 des Bearbeitungslaserstrahls 3 zu trennen. Im gezeigten Beispiel ist der Strahlteiler 13 ausgebildet, den Bearbeitungslaserstrahl 3 zu reflektieren und die Beobachtungsstrahlung 8, welche eine andere Wellenlänge als der Bearbeitungslaserstrahl 3 aufweist, zu transmittieren. Es versteht sich, dass anders als in Fig. 1 gezeigt die Umlenkung des Bearbeitungslaserstrahls 3 an dem Strahlteiler 13 in Abhängigkeit von der Art der wellenlängenselektiven Beschichtung ggf. unter einem von 90° abweichenden Winkel erfolgen kann.

Die optische Abbildungseinrichtung 5 weist eine Abbildungsoptik in Form eines Kepler-Teleskops 16 auf, welches eine im Beobachtungsstrahlengang 10 vom Strahlteiler 13 zum Detektor 6 erste Linse 16a sowie eine im Beobachtungsstrahlengang 10 vom Strahlteiler 13 zum Detektor 6 zweite Linse 16b aufweist. Die erste Linse 16a des Kepler-Teleskops 16 mit Brennweite f₂ und die zweite Linse 16b des Kepler-Teleskops 16 mit Brennweite f₃ sind im Abstand der Summe ihrer Brennweiten f₂ + f₃ voneinander angeordnet. Durch das Kepler-Teleskop 16 wird bei dem in Fig. 1 gezeigten Beispiel die Blende 15 in die Fokussierlinse 2 abgebildet, d.h. das Kepler-Teleskop 16 erzeugt ein Bild 15a der Blende 15 in der Fokussierlinse 2. Der Abstand s₃ zwischen der Blende 15 und der zweiten Linse 16b entspricht der Brennweite f₃ der zweiten Linse 16b und ist auf den Abstand s₂ zwischen der ersten Linse 16a und der Fokussierlinse 2 derart abgestimmt, dass die Blende 15 scharf in die Fokussierlinse 2 abgebildet wird. Wie in Fig. 1 ebenfalls zu erkennen ist, wird das die Blende 15 durch das Kepler-Teleskop 16 vergrößert in der Fokussierlinse 2 abgebildet.

Das Bild 15a der Blende 15 wirkt auf die Abbildung des Bearbeitungsbereichs 9 auf den Detektor 6 mittels der optischen Abbildungseinrichtung 5 so, als ob die Blende 15 in der Fokussierlinse 2 im Bearbeitungsstrahlengang 14 des Bearbeitungslaserstrahls 3 angeordnet wäre. Die Blendenöffnung des Bilds 15a der Blende 15 umfasst dabei nur einen kleinen, radial innen liegenden Bereich der Fokussierlinse 2, in dem die thermische Belastung der Fokussierlinse 2 gleichmäßig bzw. homogen verteilt ist. Es werden daher nur Objektpunkte des Bearbeitungsbereichs 9 abgebildet, bei deren Abbildung im Wesentlichen die gleiche Brechungsindexänderung der Fokussierlinse 2 wirksam wird, so dass sich die thermische Linse nicht wesentlich auf die Abbildung des Bearbeitungsbereichs 9 auf den Detektor 6 auswirkt.

Der in Fig. 1 gezeigte Laserbearbeitungskopf 1 wird zur Durchführung eines Laserbearbeitungsprozesses zur Bearbeitung des Werkstücks 4 in einer Laserbearbeitungsmaschine 20 verwendet. Die Laserbearbeitungsmaschine 20 weist eine Strahlquelle 21 zur Erzeugung des Bearbeitungslaserstrahls 3 sowie weitere zur Vereinfachung nicht bildlich dargestellte Komponenten auf, welche die Werkstückbearbeitung, insbesondere die Erzeugung einer Relativbewegung zwischen dem Laserbearbeitungskopf 1 und dem Werkstück 4, ermöglichen. Bei der Strahlquelle 21 kann es sich um einen CO₂-Laserquelle, eine Festkörper-Laserquelle, eine Dioden-Laserquelle oder um eine andere Art von Laserquelle handeln.

Im gezeigten Beispiel ist die zweite Linse 16b des Kepler-Teleskops 16 im Beobachtungsstrahlengang 10 verschiebbar angeordnet und kann mittels eines (nicht gezeigten) Aktuators entlang des Beobachtungsstrahlengangs 10, genauer gesagt entlang der optischen Achse 11, verschoben werden, wie in Fig. 1 durch einen Doppelpfeil angedeutet ist. Bei einer thermisch bedingten Brennweitenänderung der Fokussierlinse 2 oder bei einer Änderung des Abstands s₁ zwischen dem Werkstück 4 und der Fokussierlinse 2 des Laserbearbeitungskopfs 1 ändert sich die Position des Zwischenbilds des Bearbeitungsbereichs 9, das ohne eine solche thermische Linse bzw. Belastung in einer gemeinsamen Brennebene 17 zwischen den beiden Linsen 16a, 16b des Kepler-Teleskops 16 erzeugt wird. Durch Verschieben der zweiten Linse 16b des Kepler-Teleskops 16 liegt das Zwischenbild wieder in der Brennebene 17 der zweiten Linse 16b und das Strahlenbündel hinter der Linse 16b ist kollimiert und tritt kollimiert durch die Blende 15. Zusätzlich kann die Blende 15 ebenfalls verschiebbar im Beobachtungsstrahlengang 10 angeordnet sein, um den Fehler in der Position der virtuellen Blende 15a zu korrigieren, der durch die thermisch bedingte Brennweitenänderung der Fokussierlinse 2 entsteht.

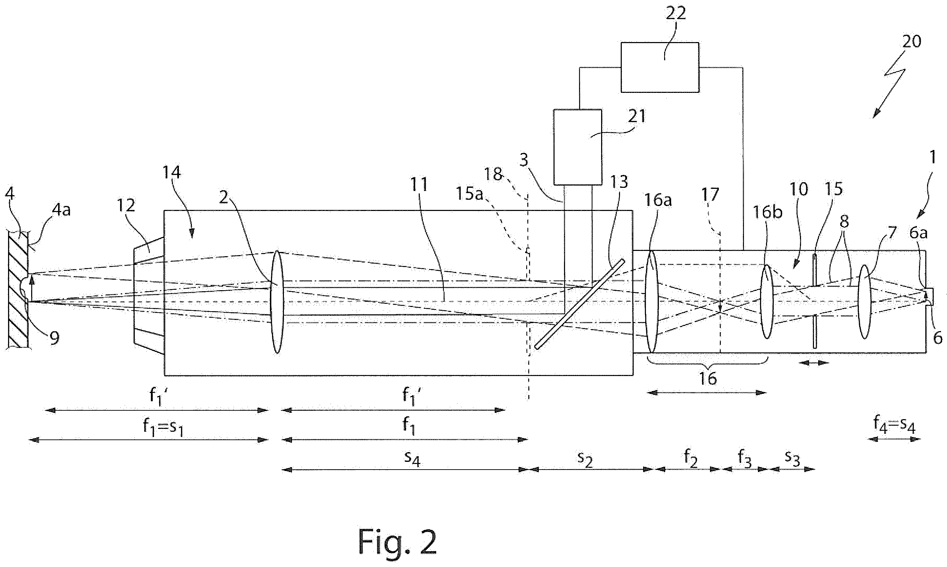

Ein Laserbearbeitungskopf 1, welcher ebenfalls eine verbesserte Prozessbeobachtung ermöglicht, ist in Fig. 2 dargestellt. Der in Fig. 2 gezeigte Laserbearbeitungskopf 1 unterscheidet sich von dem in Fig. 1 gezeigten Laserbearbeitungskopf 1 im Wesentlichen dadurch, dass die Abbildungsoptik in Form des Kepler-Teleskops 16 die Blende 15 nicht in die Fokussierlinse 2, sondern in den Bearbeitungsstrahlengang 14 des Bearbeitungslaserstrahls 3 zwischen der Fokussierlinse 2 und dem Strahlteiler 13 abbildet, und zwar im gezeigten Beispiel in eine (bildseitige) Brennebene 18 der Fokussierlinse 2, deren objektseitige und bildseitige Brennweite f₁ übereinstimmen. Zwischen dem Strahlteiler 13 und der Fokussierlinse 2 sind sowohl der Bearbeitungslaserstrahl 3 als auch die Beobachtungsstrahlung 8 kollimiert. Bei der Anordnung des Bildes 15a der Blende 15 in der Brennebene 18 der Fokussierlinse 2 erfolgt die Abbildung der Objektebene bzw. der Werkstückoberfläche 4a auf den Detektor 6 mittels der optischen Abbildungseinrichtung 5 telezentrisch, sofern die Fokussierlinse 2 thermisch nicht bzw. nur geringfügig belastet wird:
Durch die Fokussierlinse 2 wird in deren dem Werkstück 4 abgewandter Brennebene 18, in der das Bild 15a der Blende 15 erzeugt wird, ein Zwischenbild der Werkstückoberfläche 4a (Objektebene) erzeugt, welches den Bearbeitungsbereich 9 enthält. Änderungen des Objektabstands s₁, d.h. des Abstands zwischen der Werkstückoberfläche 4a und der Fokussierlinse 2, wirken sich auf die Abbildung in diesem Fall nicht aus, da sich bei der telezentrischen Abbildung die Vergrößerung nicht mit dem Objektabstand ändert und so der abgebildete, den Bearbeitungsbereich 9 enthaltende Bereich der Werkstückoberfläche 4a unverändert bleibt.

Soll der Einfluss der Brennweitenänderung der Fokussierlinse 2 bei thermischer Belastung auf die Abbildung der Werkstückoberfläche 4a bzw. des Bearbeitungsbereichs 9 kompensiert werden, so wird die Blende 15 im Beobachtungsstrahlengang 14 so angeordnet, dass sie durch das Kepler-Teleskop 16 an einer Position im Beobachtungsstrahlengang 10 abgebildet wird, die zwischen der in Fig. 2 gezeigten Brennebene 18 der thermisch unbelasteten Fokussierlinse 2 und der Fokussierlinse 2 selbst liegt. Die thermische Belastung der Fokussierlinse 2 führt zu einer gegenüber der Brennweite f₁ im thermisch unbelasteten Zustand verkürzten Brennweite f₁' (vgl. Fig. 2), die rechnerisch in Abhängigkeit von der Stärke der Laserleistung ermittelt werden kann. Die Position der Blende 15 im Beobachtungsstrahlengang 10 kann daher bei bekannter Laserleistung so gewählt werden, dass das Bild 15a der Blende 15 in der in Richtung zur Fokussierlinse 2 verschobenen (nicht gezeigten) Brennebene der thermisch belasteten Fokussierlinse 2 mit verkürzter Brennweite f₁' liegt, so dass auch während der Laserbearbeitung eine telezentrische Abbildung des Bearbeitungsbereichs 9 bzw. der Werkstückoberfläche 4a auf den Detektor 6 erfolgt. Um das Bild 15a der Blende 15 stets in der Brennebene 18 der Fokussierlinse 2 abzubilden, können ggf. die Blende 15 und entweder das Kepler-Teleskop 16 oder zumindest eine der Teleskoplinsen 16a, 16b mit Hilfe eines oder mehrerer (nicht gezeigter) Aktuatoren im Beobachtungsstrahlengang 10 verschoben werden.

Eine Steuereinrichtung 22 der Laserbearbeitungsmaschine 20 kann anhand eines Modells der von der Laserleistung des Bearbeitungslaserstrahls 3 abhängigen Brennweite f₁, f₁' der Fokussierlinse 2 den Verschiebeweg der Blende 15 und des Kepler-Teleskops 16 bzw. der ersten Teleskoplinse 16a oder der zweiten Teleskoplinse 16b stets so einstellen, dass das Bild 15a der Blende 15 in die in ihrer Position entlang der Strahlachse 11 des Bearbeitungslaserstrahls 3 variierende Brennebene 18 der Fokussierlinse 2 abgebildet wird. Eine Verschiebbarkeit der Blende 15 ist nicht nötig, wenn die Fehler in der Positionierung der virtuellen Blende 15a durch die thermisch bedingte Brennweitenänderung der Fokussierlinse 2 gering sind.

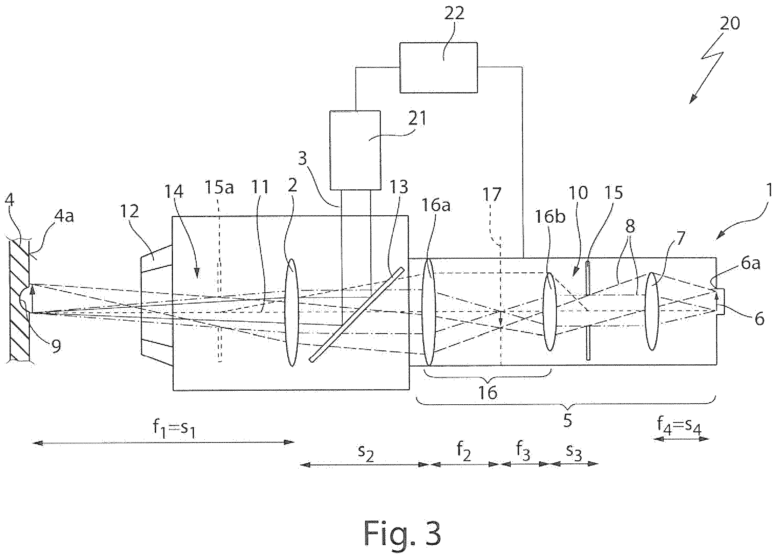

Fig. 3 zeigt eine Laserbearbeitungsmaschine 20 mit einem Laserbearbeitungskopf 1, bei dem die Abbildungsoptik in Form des Kepler-Teleskops 16 ein Bild 15a der Blende 15 im Bearbeitungsstrahlengang 14 des Bearbeitungslaserstrahls 3 zwischen der Fokussierlinse 2 und der Werkstückoberfläche 4a erzeugt. Auf diese Weise kann eine nicht senkrecht zur Strahlachse 10 des Bearbeitungslaserstrahls 3 stehende Objektebene bzw. Werkstückebene 4a bei der Abbildung korrigiert werden, da bei einer Positionierung des Bilds 15a der Blende 15 zwischen dem Werkstück 4 und der Fokussierlinse 2 die weiter außen liegenden Objektpunkte des Bearbeitungsbereichs 9 an der Werkstückoberfläche 4a durch einen weiter innen liegenden Linsenbereich der Fokussierlinse 2 abgebildet werden.

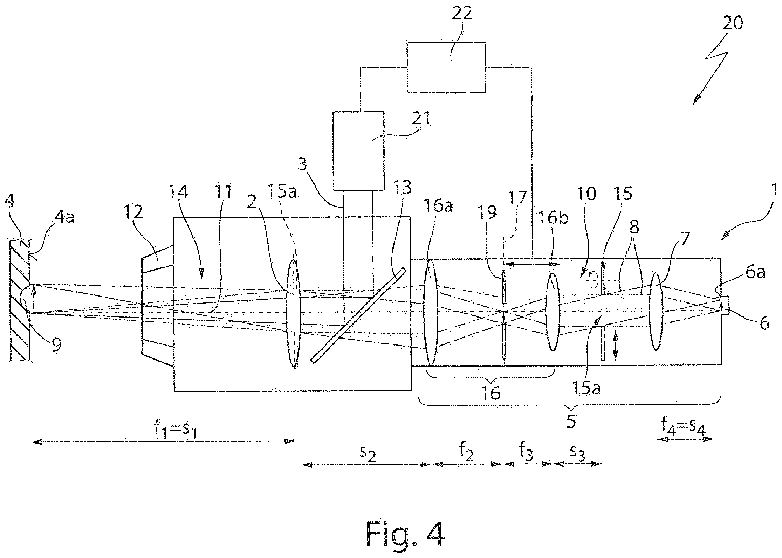

Bei dem in Fig. 4 gezeigten Beispiel wird wie bei dem in Fig. 1 gezeigten Beispiel die Blende 15 in die Fokussierlinse 2 abgebildet. Das Kepler-Teleskop 16 der optischen Abbildungseinrichtung 5 weist im Gegensatz zum in Fig. 1 gezeigten Laserbearbeitungskopf 1 eine weitere Blende 19 ("Nahfeldblende") auf, die in einer Brennebene 17 des Kepler-Teleskops 16 zwischen der ersten Linse 16a und der zweiten Linse 16b angeordnet ist. Die weitere Blende 19 dient dazu, den Einfluss von störender Streustrahlung auf die Abbildung zu vermindern. Reflektierte Strahlungsanteile von optischen Elementen im Bearbeitungsstrahlengang 14 des Bearbeitungslaserstrahls 3, insbesondere von den Oberflächen der Fokussierlinse 2, die nicht unter einem zum Hauptstrahl der Beobachtungsstrahlung 8 parallelen Winkel reflektiert werden, werden von der weiteren Blende 19 ausgeblendet und gelangen nicht zum Detektor 6.

Bei dem in Fig. 4 gezeigten Laserbearbeitungskopf 1 sind die weitere Blende 19 und die zweite Linse 16b miteinander gekoppelt verschiebbar im Beobachtungsstrahlengang 10 angeordnet, d.h. diese können ohne Veränderung ihres relativen Abstands entlang der optischen Achse 11 des Beobachtungsstrahlengangs 10 verschoben werden. Für die gemeinsame Verschiebung der weiteren Blende 19 und der zweiten Linse 16b kann ein Aktuator dienen, der in Fig. 4 durch einen Doppelpfeil angedeutet ist. Analog zu dem in Fig. 1 gezeigten Beispiel kann auch bei dem in Fig. 4 gezeigten Beispiel bei einer thermisch bedingten Änderung der Brennweite f₁ der Fokussierlinse 2 oder bei einer Änderung des Objektabstands s₁ durch Verschieben der Einheit aus zweiter Linse 16b und weiterer Blende 19 die weitere Blende 19 genau im Zwischenbild in der entlang der optischen Achse 11 verschobenen Brennebene 17 des Kepler-Teleskops 16 angeordnet werden.

Bei dem in Fig. 4 gezeigten Laserbearbeitungskopf 1 ist außerdem die Blende 15 senkrecht zum Beobachtungsstrahlengang 10 bzw. zu dessen optischer Achse 11 (d.h. in der Blendenebene verschiebbar) im Beobachtungsstrahlengang 10 angeordnet. Durch die Verschiebung der Blende 15 kann der Teilbereich der Fokussierlinse 4 eingestellt werden, durch den die Abbildung des Bearbeitungsbereichs 9 auf den Detektor 6 erfolgt. Auf diese Weise kann die Beobachtungsrichtung bzw. der Beobachtungswinkel verändert werden. Wie in Fig. 4 ebenfalls dargestellt ist, kann die Blende 15 zu diesem Zweck alternativ oder zusätzlich um eine parallel zur optischen Achse 11 verlaufende Drehachse gedreht werden, wodurch sich ebenfalls die Position einer Blendenöffnung 15a der Blende 15 in der Blendenebene einstellen lässt.

Zusammenfassend kann auf die weiter oben beschriebene Weise die Genauigkeit der Prozessbeobachtung bei der Lasermaterialbearbeitung, beispielsweise beim Laserschneiden oder beim Laserschweißen, verbessert werden. Auch kann die Prozessbeobachtung erforderlichenfalls flexibel an die Prozessbedingungen angepasst werden. Auch ist der Strahlteiler 13 nicht zwingend als wellenlängenselektives optisches Element ausgebildet, sondern kann beispielsweise als geometrischer Strahlteiler z.B. in Form eines Scraper-Spiegels oder dergleichen ausgebildet sein. Die Fokussiereinrichtung muss nicht zwingend aus einer Fokussierlinse bestehen, sondern kann beispielsweise für die Fokussierung des Bearbeitungslaserstrahls 3 eine Linsengruppe aufweisen oder reflektierende optische Elemente enthalten bzw. aus diesen bestehen. Es versteht sich, dass die weiter oben beschriebenen Beispiele im Fall einer Fokussiereinrichtung in Form einer Linsengruppe analog gelten, wobei die Brennweite f₁ der Fokussierlinse 2 für die obigen Betrachtungen durch die Gesamt-Brennweite der Linsengruppe ersetzt wird. Auch die Linsen 16a, 16b der Abbildungsoptik 16 können selbstverständlich als Linsengruppen ausgebildet sein, wobei für die obigen Betrachtungen jeweils die Brennweite f₂ bzw. f₃ der Linse 16a, 16b durch die Gesamt-Brennweite der jeweiligen Linsengruppe ersetzt wird. Die Steuerung der Verschiebung der Linsen 16a, 16b der Abbildungsoptik 16, die Steuerung der Verschiebung bzw. Bewegung der Blende 15 sowie ggf. der weiteren Blende 19 wird von der Steuerungseinrichtung 22 der Laserbearbeitungsmaschine 20 vorgenommen. Zu diesem Zweck kann die Steuerungseinrichtung 22 ggf. auf Informationen über die thermisch bedingte Brennweitenänderung der Fokussierlinse 2 zurückgreifen.

## Patentansprüche

1. Laserbearbeitungskopf (1), umfassend:
eine Fokussiereinrichtung (2) zur Fokussierung eines Bearbeitungslaserstrahls (3) auf ein zu bearbeitendes Werkstück (4), die in einem Bearbeitungsstrahlengang (14) des Bearbeitungslaserstrahls (3) angeordnet ist, eine optische Abbildungseinrichtung (5), die einen Detektor (6) umfasst und die ausgebildet ist, Beobachtungsstrahlung (8) aus einem Bearbeitungsbereich (9) des Werkstücks (4) entlang eines die Fokussiereinrichtung (2) durchlaufenden Beobachtungsstrahlengangs (10) auf den Detektor (6) abzubilden,
eine im Beobachtungsstrahlengang (10) angeordnete, vom Detektor (6) beabstandete Blende (15), wobei die optische Abbildungseinrichtung (5) zur Abbildung des Bearbeitungsbereichs (9) des Werkstücks (4) auf den Detektor (6) eine zwischen der Blende (15) und dem Detektor (6) angeordnete weitere Optik (7) umfasst, sowie
einen Strahlteiler (13) zur Trennung des Beobachtungsstrahlengangs (10) der Beobachtungsstrahlung (8) vom Bearbeitungsstrahlengang (14) des Bearbeitungslaserstrahls (3),
**dadurch gekennzeichnet,**
**dass** die optische Abbildungseinrichtung (5) eine im Beobachtungsstrahlengang (10) zwischen dem Strahlteiler (13) und der Blende (15) angeordnete Abbildungsoptik (16) in Form eines Teleskops aufweist, die ausgebildet ist, im Bearbeitungsstrahlengang (14) des Bearbeitungslaserstrahls (3) zwischen dem Strahlteiler (13) und dem Werkstück (4) ein Bild (15a) der Blende (15) zu erzeugen.

2. Laserbearbeitungskopf nach Anspruch 1, welcher ausgebildet ist, das Bild (15a) der Blende (15) im Bearbeitungsstrahlengang (14) zwischen der Fokussiereinrichtung (2) und dem Werkstück (4) zu erzeugen.

3. Laserbearbeitungskopf nach Anspruch 1, welcher ausgebildet ist, das Bild (15a) der Blende (15) im Bearbeitungsstrahlengang (14) zwischen dem Strahlteiler (13) und der Fokussiereinrichtung (2) zu erzeugen.

4. Laserbearbeitungskopf nach Anspruch 2, welcher ausgebildet ist, das Bild (15a) der Blende (15) in einer Brennebene (18) einer Fokussierlinse (2) der Fokussiereinrichtung zu erzeugen, die sich zwischen dem Strahlteiler (13) und der Fokussierlinse (2) befindet.

5. Laserbearbeitungskopf nach Anspruch 1, welcher ausgebildet ist, das Bild (15a) der Blende (15) in einer Fokussierlinse (2) der Fokussiereinrichtung zu erzeugen.

6. Laserbearbeitungskopf nach einem der vorhergehenden Ansprüche, bei dem die Blende (15) im Beobachtungsstrahlengang (10) verschiebbar ist und/oder bei dem eine Blendenöffnung (15a) der Blende (15) senkrecht zum Beobachtungsstrahlengang (10) bewegbar ist.

7. Laserbearbeitungskopf nach einem der vorhergehenden Ansprüche, bei welcher die Abbildungsoptik als Kepler-Teleskop (16) oder als Galilei-Teleskop ausgebildet ist.

8. Laserbearbeitungskopf nach Anspruch 7, bei dem in einer gemeinsamen Brennebene (17) zwischen einer ersten Linse (16a) und einer zweiten Linse (16b) des Kepler-Teleskops (16) eine weitere Blende (19) angeordnet ist.

9. Laserbearbeitungskopf nach Anspruch 7 oder 8, bei welcher die im Beobachtungsstrahlengang (10) vom Strahlteiler (13) zum Detektor (6) erste und/oder zweite Linse (16a, 16b) des Kepler-Teleskops (16) im Beobachtungsstrahlengang (10) verschiebbar ist.

10. Laserbearbeitungskopf nach Anspruch 9, bei welcher die weitere Blende (19) mit der zweiten Linse (16b) gekoppelt in Beobachtungsstrahlengang (10) verschiebbar ist.

11. Laserbearbeitungsmaschine (20), umfassend: einen Laserbearbeitungskopf (1) nach einem der vorhergehenden Ansprüche, sowie eine Strahlquelle (21) zur Erzeugung des Bearbeitungslaserstrahls (3).

## Claims

1. A laser machining head (1) comprising:
a focusing device (2) for focusing a machining laser beam (3) onto a workpiece (4) to be machined, said focusing device (2) being arranged in a machining beam path (14) of the machining laser beam (3),
an optical imaging device (5) which comprises a detector (6) and which is embodied to image observation radiation (8) from a machining region (9) of the workpiece (4) onto the detector (6) along an observation beam path (10) passing through the focusing device (2),
a stop (15) arranged in the observation beam path (10) and spaced apart from the detector (6), wherein the optical imaging device (5) comprises a further optical unit (7), arranged between the stop (15) and the detector (6), for imaging the machining region (9) of the workpiece (4) onto the detector (6), as well as a beam splitter (13) for separating the observation beam path (10) of the observation radiation (8) from the machining beam path (14) of the machining laser beam (3),
**characterized in that**
the optical imaging device (5) comprises an imaging optical unit (15) in the form of a telescope arranged in the observation beam path (10) between the beam splitter (13) and the stop (15), embodied to produce an image (15a) of the stop (15) in the machining beam path (14) of the machining laser beam (3) between the beam splitter (13) and the workpiece (4).

2. The laser machining head as claimed in claim 1, embodied to produce the image (15a) of the stop (15) in the machining beam path (14) between the focusing device (2) and the workpiece (4).

3. The laser machining head as claimed in claim 1, embodied to produce the image (15a) of the stop (15) in the machining beam path (14) between the beam splitter (13) and the focusing device (2).

4. The laser machining head as claimed in claim 2, embodied to produce the image (15a) of the stop (15) in a focal plane (18) of a focusing lens (2) of the focusing device, situated between the beam splitter (13) and the focusing lens (2).

5. The laser machining head as claimed in claim 1, embodied to produce the image (15a) of the stop (15) in a focusing lens (2) of the focusing device.

6. The laser machining head as claimed in any one of the preceding claims, wherein the stop (15) is displaceable in the observation beam path (10) and/or wherein an aperture (15a) of the stop (15) is movable perpendicular to the observation beam path (10).

7. The laser machining head as claimed in any one of the preceding claims, wherein the imaging optical unit is embodied as a Kepler telescope (16) or as a Galilei telescope.

8. The laser machining head as claimed in claim 7, wherein a further stop (19) is arranged in a common focal plane (17) between a first lens (16a) and a second lens (16b) of the Kepler telescope (16).

9. The laser machining head as claimed in claim 7 or 8, wherein the first lens (16a) and/or the second lens (16b) of the Kepler telescope (16) in the observation beam path (10) from the beam splitter (13) to the detector (6) is displaceable in the observation beam path (10).

10. The laser machining head as claimed in claim 9, wherein the further stop (19) is displaceable in the observation beam path (10) in a manner coupled to the second lens (16b).

11. A laser processing machine (20) comprising: a laser machining head (1) as claimed in any one of the preceding claims, and a beam source (21) for producing the machining laser beam (3).

## Revendications

1. Tête (1) d'usinage au laser, comprenant :
un dispositif de focalisation (2) qui est conçu pour focaliser un faisceau laser d'usinage (3) sur une pièce (4) à usiner, et est situé sur un trajet (14) de rayonnement d'usinage dudit faisceau laser d'usinage (3) ;
un dispositif d'imagerie optique (5) qui inclut un détecteur (6) et est réalisé en vue de reproduire, sur ledit détecteur (6), un rayonnement d'observation (8) émanant d'une zone d'usinage (9) de la pièce (4), le long d'un trajet (10) de rayonnement d'observation traversant le dispositif de focalisation (2) ;
un diaphragme (15) éloigné du détecteur (6) et situé sur le trajet (10) de rayonnement d'observation, sachant que le dispositif d'imagerie optique (5) inclut, en vue de reproduire la zone d'usinage (9) de la pièce (4) sur ledit détecteur (6), une optique supplémentaire (7) interposée entre ledit diaphragme (15) et ledit détecteur (6) ; ainsi
qu'un diviseur de faisceaux (13), conçu pour séparer le trajet (10) de rayonnement d'observation du rayonnement d'observation (8) d'avec le trajet (14) de rayonnement d'usinage du faisceau laser d'usinage (3),
**caractérisée par le fait**
**que** le dispositif d'imagerie optique (5) est muni d'une optique de reproduction (16) revêtant la forme d'un télescope, interposée entre le diviseur de faisceaux (13) et le diaphragme (15) sur le trajet (10) de rayonnement d'observation, et réalisée en vue d'engendrer une image (15a) dudit diaphragme (15), entre ledit diviseur de faisceaux (13) et la pièce (4), sur le trajet (14) de rayonnement d'usinage du faisceau laser d'usinage (3).

2. Tête d'usinage au laser selon la revendication 1, réalisée en vue d'engendrer l'image (15a) du diaphragme (15), sur le trajet (14) de rayonnement d'usinage, entre le dispositif de focalisation (2) et la pièce (4).

3. Tête d'usinage au laser selon la revendication 1, réalisée en vue d'engendrer l'image (15a) du diaphragme (15), sur le trajet (14) de rayonnement d'usinage, entre le diviseur de faisceaux (13) et le dispositif de focalisation (2).

4. Tête d'usinage au laser selon la revendication 2, réalisée en vue d'engendrer l'image (15a) du diaphragme (15) dans un plan focal (18) d'une lentille focalisante (2) du dispositif de focalisation, situé entre le diviseur de faisceaux (13) et ladite lentille focalisante (2).

5. Tête d'usinage au laser selon la revendication 1, réalisée en vue d'engendrer l'image (15a) du diaphragme (15) dans une lentille focalisante (2) du dispositif de focalisation.

6. Tête d'usinage au laser selon l'une des revendications précédentes, dans laquelle le diaphragme (15) peut être déplacé sur le trajet (10) de rayonnement d'observation ; et/ou dans laquelle une ouverture (15a) dudit diaphragme (15) peut être mue perpendiculairement audit trajet (10) de rayonnement d'observation .

7. Tête d'usinage au laser selon l'une des revendications précédentes, dans laquelle l'optique de reproduction est réalisée sous la forme d'un télescope Kepler (16) ou sous la forme d'un télescope de Galilée.

8. Tête d'usinage au laser selon la revendication 7, dans laquelle un diaphragme supplémentaire (19) est disposé dans un plan focal commun (17) entre une première lentille (16a) et une seconde lentille (16b) du télescope Kepler (16).

9. Tête d'usinage au laser selon la revendication 7 ou 8, dans laquelle la (les) lentille(s) (16a, 16b) du télescope Kepler (16), occupant le premier et/ou le second emplacement(s) sur le trajet (10) de rayonnement d'observation partant du diviseur de faisceaux (13) et gagnant le détecteur (6), peu(ven)t être déplacée(s) sur ledit trajet (10) de rayonnement d'observation.

10. Tête d'usinage au laser selon la revendication 9, dans laquelle le diaphragme supplémentaire (19) peut être déplacé, sur le trajet (10) de rayonnement d'observation, en étant couplé à la seconde lentille (16b).

11. Machine (20) d'usinage au laser, comprenant : une tête (1) d'usinage au laser conforme à l'une des revendications précédentes, ainsi qu'une source de rayonnements (21) conçue pour engendrer le faisceau laser d'usinage (3).
